# EUROPÄISCHE PATENTSCHRIFT

(11) **EP 4 479 210 B1**
(45) Veröffentlichungstag und Bekanntmachung des Hinweises auf die Patenterteilung: **18.06.2025**
(21) Anmeldenummer: 23805459.7
(22) Anmeldetag: 01.11.2023
(51) Int. Cl.: B22F 10/31, B22F 7/08, B22F 12/30, B23Q 1/00, B33Y 30/00, B33Y 50/02, B22F 12/90, B22F 10/28, B33Y 10/00

(54) **KALIBRIERSYSTEM UND KALIBRIERVERFAHREN ZUR KALIBRIERUNG EINES BAUPLATTFORMSYSTEMS IN EINER ADDITIVEN FERTIGUNGSVORRICHTUNG**
CALIBRATION SYSTEM AND CALIBRATION METHOD FOR CALIBRATING A BUILDING PLATFORM SYSTEM IN AN ADDITIVE MANUFACTURING DEVICE
SYSTÈME D'ÉTALONNAGE ET PROCÉDÉ D'ÉTALONNAGE POUR ÉTALONNER UN SYSTÈME DE PLATEFORME DE CONSTRUCTION DANS UN DISPOSITIF DE FABRICATION ADDITIVE

(30) Priorität: 03.11.2022 DE 102022129035; 03.11.2022 DE 102022129042
(43) Veröffentlichungstag der Anmeldung: 25.12.2024
(73) Patentinhaber: AdditiveStream4D GmbH, 10625 Berlin (DE)
(72) Erfinder: FEICKS, Simon Frederik, 10245 Berlin (DE); MIASKOWSKI, Clemens Cosmo, 10707 Berlin (DE)
(74) Vertreter: Werner, André
(86) Internationale Anmeldenummer: PCT/DE2023/150028
(87) Internationale Veröffentlichungsnummer: WO 2024/094256

(56) Entgegenhaltungen:
- DE-B3- 102022 129 042
- US-A1- 2020 215 759
- US-A1- 2020 215 760

## Beschreibung

Die Erfindung betrifft ein Kalibriersystem sowie ein Kalibrierverfahren zur Kalibrierung eines in einem Bauraum einer laserbasierten additiven Fertigungsvorrichtung angeordneten Bauplattformsystems. Bevorzugte Einsatzgebiete des Kalibriersystems und des Kalibrierverfahrens sind die hybride additive Neuteilfertigung sowie die Reparatur von konventionell oder additiv gefertigten Bauteilen.

Die Verfahren der additiven Fertigung, wie zum Beispiel das pulverbettbasierte selektive Laserschmelzen (engl. Laser Powder Bed Fusion, kurz: LPBF), sind in erster Linie für die endkonturnahe Herstellung vollständiger Neuteile konzipiert: Auf Grundlage eines virtuellen 3D-Bauteilmodells wird auf einer Bauplattform der additiven Fertigungsvorrichtung Schicht für Schicht Material konsolidiert, bis der durch das 3D-Modell vorgegebene Bauteilformkörper komplettiert ist. Ausgangsmaterial zur Herstellung hochwertiger, metallischer Bauteile mit Hilfe des pulverbettbasierten selektiven Laserschmelzens ist regelmäßig ein eng spezifiziertes und damit kostenintensives Metallpulver, das jedoch nur zu einem Bruchteil aufgeschmolzen wird, um das additiv gefertigte Bauteil zu bilden. Ein Großteil des Pulvers dient lediglich als Füll- und Stützmaterial.

Die additive Fertigung metallischer Bauteile durch selektives Laserschmelzen ist infolge langer Fertigungszeiten, unzureichend bekannter Materialdaten und auch aufgrund des hohen Pulververbrauchs in vielen Branchen gegenüber klassischen Herstellverfahren mitunter noch unrentabel. Etabliert hat sich die additive Fertigung aber bereits bei der Herstellung von hochpreisigen, geometrisch komplexen oder individualisierten Bauteilen, insbesondere von Bauteilen aus den Bereichen der Luftfahrtindustrie oder der Medizintechnik.

Neben der Neuteilfertigung bietet die additive Fertigung zudem die Möglichkeit zur endkonturnahen Reparatur von Bauteilen. In der Flugtriebwerksindustrie beispielsweise werden Teile von Lauf- oder Leitschaufeln durch additiven Aufbau des verschlissenen Materials instandgesetzt.

Die additive Fertigung, bei der Material auf bereits bestehende Bauteile bzw. Bauteilelemente endkonturnah aufgetragen wird, wird auch als hybride (additive) Fertigung bezeichnet. Im Unterschied zur Komplettfertigung erfordert die hybride Fertigung eine exakte Positionierung der Bauteile innerhalb der Fertigungsvorrichtung bzw. die exakte Kenntnis der Bauteillage auf der Bauplattform.

Als Bauplattform wird im Allgemeinen die Komponente der additiven Fertigungsvorrichtung bezeichnet, auf der die Bauteile gefertigt werden. Im Kontext dieser Offenbarung wird die Gesamtheit aller Vorrichtungskomponenten der additiven Fertigungsvorrichtung, die die zu fertigenden Bauteile tragen, als Bauplattformsystem bezeichnet; als Bauplattform im engeren Sinne wird das im Regelfall plattenförmige Vorrichtungselement verstanden, auf dem die additiv gefertigten Bauteile unmittelbar befestigt sind. Das Bauplattformsystem umfasst also mindestens die Bauplattform; in der einfachsten konstruktiven Ausführung beschränkt sich das Bauplattformsystem auf die Bauplattform.

Bei hybrider additiver Fertigung eines Bauteils wird Material durch additiven Aufbau auf einen vorhandenen Grundkörper, nachfolgend Basisformkörper bezeichnet, aufgebracht. Der additive aufgebaute Teil des Bauteils, der Aufbauformkörper, bildet nach Abschluss der additiven Fertigung gemeinsam mit dem Basisformkörper das Bauteil.

In Bezug auf laserbasierte additive Fertigungsverfahren, wie das pulverbettbasierte selektive Laserschmelzen, besteht bei der hybriden additiven Fertigung die Herausforderung, dass der Laser (genauer der Laser-Scanner) in einem separaten Koordinatensystem, dem Laser-Koordinatensystem, gesteuert wird. Die Geometriedaten des Bauplattformsystems und die der ggf. darauf vorhandenen Basisformkörper werden vor Beginn des additiven Fertigungsprozesses an die Steuereinheit des Lasers übergeben, d. h. in das Laser-Koordinatensystem transferiert. Das Laser-Koordinatensystem ist nach der Datenübergabe unabhängig von dem Koordinatensystem, mit dem die reale Lage des Bauplattformsystems und die Lage der bereits auf dem Bauplattformsystem vorhandenen Basisformkörper im Bauraum definiert sind. Letzteres Koordinatensystem wird als Bauraum-Koordinatensystem bezeichnet. Befindet sich ein Basisformkörper an einer bestimmten Position im Bauraum, trifft der Laser (bzw. der Laserspot) bei hybrider additiver Fertigung den Basisformkörper nicht immer hinreichend genau. Für jede Position der im Bauraum befindlichen Objekte, die durch Bauraum-Koordinaten im Bauraum-Koordinatensystem definierbar ist, kann sich eine Abweichung, auch Offset genannt, zwischen den Bauraum-Koordinaten im Bauplattform-Koordinatensystem und den Laser-Koordinaten im Laser-Koordinatensystem ergeben.

Um eine hochpräzise Steuerung des Lasers zu erreichen - und damit letztlich eine hohe Genauigkeit bei der hybriden additiven Fertigung zu gewährleisten - können die Bauraumkoordinaten mit einem Korrekturwert korrigiert und diese korrigierten Lageinformationen des Bauplattformsystems sowie der Basisformkörper an das Laser-Koordinatensystem übergeben werden.

Die Korrekturwerte für die Bauraum-Koordinaten können wiederum durch eine innerhalb der additiven Fertigungsvorrichtung durchgeführten Kalibrierung ermittelt werden. Zu diesem Zweck genutzte Kalibrierverfahren basieren regelmäßig auf der fotografischen Bilderfassung von Mustern und Referenzmarkierungen. Bekannt sind solche Kalibrierverfahren - und die dazu verwendeten Kalibriervorrichtungen oder Kalibriersysteme - unter anderem aus EP 0 792 481 B1, DE 199 18 631 A1, US 6 483 596 B1, WO 2017/158327 A1 oder DE 10 2021 105 918 A1. In WO 2017/158327 A1 wird ein Kalibrierverfahren beschrieben, bei dem ein Kalibriermuster mittels des Lasers der additiven Fertigungsvorrichtung in eine Aluminiumplatte eingebracht wird.

EP 4 151 342 A1 offenbart ferner ein Fertigungssystem zur additiven Fertigung eines Werkstücks, wobei das Fertigungssystem unter anderem eine Bauplatte sowie eine optische Vorrichtung zur Erfassung von Bilddaten der Bauplatte aufweist. WO 2020/ 212 108 A1 beschreibt ein Kalibrierverfahren für eine zur Überwachung eines additiven Fertigungsprozesses vorgesehene Kamera, wobei zur Kalibrierung der Kamera ein additiv gefertigtes Bauteil mit einem Muster dieses Bauteils abgeglichen wird.

US 2020/215759 A1 offenbart ein Kit zur Kalibrierung eines Kopfsystems einer Strahlungsquelle einer Vorrichtung zur additiven Fertigung, welches eine Kalibrierungsplatte mit mehreren Referenzmarkierungen und eine Brennhalterung aus mindestens einem Material, das für die Strahlung der Quelle empfindlich ist, umfasst.

Diese bekannten Kalibrierverfahren und die dazu genutzten Kalibriervorrichtungen oder Kalibriersysteme fokussieren regelmäßig auf die klassische additive Fertigung, d. h. die Fertigung kompletter Neuteile, oder beinhalten einen Eingriff in die Maschinensteuerung.

Aufgabe der Erfindung ist es, ein Kalibriersystem sowie ein Kalibrierverfahren zur Kalibrierung eines in einem Bauraum einer additiven Fertigungsvorrichtung angeordneten Bauplattformsystems bereitzustellen, die den präzisen Materialaufbau bei laserbasierter hybrider additiver Fertigung von Bauteilen ermöglicht, ohne dass ein Eingriff in die Maschinensteuerung erforderlich ist.

Diese Aufgabe wird durch ein Kalibriersystem mit den Merkmalen nach Anspruch 1 sowie ein Kalibrierverfahren nach Anspruch 8 gelöst. Zweckmäßige Weiterbildungen der Erfindung sind in den Ansprüchen 2 bis 7 sowie 9 bis 11 aufgeführt.

Das nachstehend beschriebene Kalibriersystem und das damit durchgeführte Kalibrierverfahren dienen zur Kalibrierung eines in einem Bauraum einer additiven Fertigungsvorrichtung angeordneten Bauplattformsystems, wobei die additive Fertigungsvorrichtung einen steuerbaren Laser zur Konsolidierung von Material während der additiven Fertigung auf dem Bauplattformsystem aufweist. Der Bauraum befindet sich bei gebräuchlichen additiven Fertigungsvorrichtungen, wie zum Beispiel den Anlagen zum pulverbettbasierten selektiven Laserschmelzen, in einem Bauschacht, in dem das Bauplattformsystem auch zumeist höhenverstellbar installiert ist.

Bei derartiger laserbasierter additiver Fertigung von Bauteilen auf einem Bauplattformsystem einer additiven Fertigungseinrichtung wird die Lage des Bauplattformsystems im Bauraum - ebenso wie alle anderen Objekte im Bauraum - durch Bauraum-Koordinaten innerhalb eines Bauraum-Koordinatensystems definiert. Bei hybrider additiver Fertigung eines Bauteils aus einem Basisformkörper und einem additiv darauf aufgebauten Aufbauformkörper wird also auch die Lage der Basisformkörper durch diese Bauraum-Koordinaten innerhalb des Bauraum-Koordinatensystems beschrieben. Die Bauraum-Koordinaten werden vor Beginn der additiven Fertigung an eine zur Steuerung des Lasers vorgesehene Steuerungseinheit der additiven Fertigungsvorrichtung übergeben.

Die nachfolgend beschriebene Kalibrierung des Bauplattformsystems basiert darauf, dass an die Steuereinheit der additiven Fertigungsvorrichtung die bekannten, zum Beispiel aus Computermodellen oder aus Vormessungen außerhalb der Fertigungsvorrichtung generierten, zur Steuerung des Lasers vorgesehenen Bauraum-Koordinaten zusammen mit einem Korrekturwert bzw. Korrekturfaktor für jede einzelne Bauraum-Koordinate übergeben werden, damit der Laser zielgenau die vorgesehene tatsächliche Position innerhalb des Bauraums trifft.

Die Ermittlung dieser Korrekturwerte ist mithin das engere Ziel des nachfolgend beschriebenen Kalibrierverfahrens und des hierfür genutzten Kalibriersystems.

Nach Maßgabe der Erfindung weist das vorgeschlagene Kalibriersystem ein Optikmodul sowie eine auf dem Bauplattformsystem fixierbare, aus einem vorgegebenen, vorzugsweise aus einem metallischen Grundwerkstoff bestehende Kalibrierplatte auf.

Das Optikmodul umfasst eine optische Erfassungseinheit, eine Optikhalterung sowie eine Auflageplatte zur Abdeckung des Bauraums der additiven Fertigungsvorrichtung. Die Auflageplatte besitzt eine Lichtdurchtrittsaussparung, in deren Bereich die optische Erfassungseinheit mittels der Optikhalterung so befestigt ist, dass die im Bauraum platzierte Kalibrierplatte optisch erfasst werden kann. Die optische Erfassungseinheit befindet sich regelmäßig auf der dem Bauraum gegenüberliegenden Seite der Auflageplatte. Die optische Achse der optischen Erfassungseinheit ist vorzugsweise senkrecht zur Auflageplatte ausgerichtet. Die optische Erfassungseinheit kann beispielsweise ein Kamera oder eine - vorzugsweise hochauflösende - Streifenlichtprojektionseinheit sein. Bauraumseitig sind Leuchtmittel zur Ausleuchtung des Bauraums an der Auflageplatte angebracht, zum Beispiel in Form von Leuchtdioden, die vorzugsweise gleichmäßig verteilt an der Bauraumseite der Auflageplatte angeordnet sind.

Die Kalibrierplatte weist auf einer ihrer beiden flächig ausgedehnten Plattenseiten eine Sichtfläche auf, die bei bestimmungsgemäßen Aufbau des Kalibriersystems der optischen Erfassungseinheit zugewandt ist. Die Sichtfläche der Kalibrierplatte ist mit einer sich vom vorgegebenen Grundwerkstoff farblich abhebenden Oberflächenschicht versehen, d. h., die Oberflächenschicht besitzt einen farblich deutlichen Kontrast gegenüber der Färbung des vorgegebenen Grundwerkstoffs. Vorzugsweise ist die Oberflächenschicht dunkel, also zum Beispiel schwarz, gefärbt, während der unbeschichtete Grundwerkstoff ein helles Erscheinungsbild besitzt (bei metallischem Grundwerkstoff häufig ein silbrig-metallisches Erscheinungsbild).

Das Kalibriersystem kann ferner einen oder mehrere Referenzmarkenträger mit jeweils einer Referenzmarkierung umfassen. Diese Referenzmarkenträger sind jeweils positionsgenau am Bauplattformsystem fixierbar; sie dienen als Bezugspunkte an dem in der additiven Fertigungsvorrichtung fixierten Bauplattformsystem. Um die Sicht der optischen Erfassungseinheit auf die Referenzmarkierungen zu gewährleisten, können Referenzmarken-Aussparungen in der Kalibrierplatte eingebracht sein.

Das erfindungsgemäße Kalibrierverfahren zur Kalibrierung des im Bauraum der laserbasierten additiven Fertigungsvorrichtung bestimmungsgemäß befestigten Bauplattformsystems wird mit dem vorstehend beschriebenen Kalibriersystem, welches das Optikmodul, die Kalibrierplatte sowie die mit den Referenzmarkierungen versehenen Referenzmarkenträger umfasst, und mit einer Auswerteeinheit zur Auswertung von Lageparametern und zur Ermittlung der oben genannten Korrekturwerte durchgeführt.

Die Kalibrierplatte und die Referenzmarkenträger werden zur Kalibrierung des Bauplattformsystems so fixiert, dass die Sichtfläche und die Referenzmarkierungen gleichzeitig bei Draufsicht auf die Sichtfläche der Kalibrierplatte sichtbar sind.

Auf der Sichtseite der Kalibrierplatte wird mittels des Lasers der additiven Fertigungsvorrichtung ein aus zweidimensionalen Musterelementen bestehendes - ebenfalls zweidimensionales - Kalibriermuster in der Sichtflächenebene der Kalibrierplatte erzeugt. Die Lage der einzelnen Musterelemente ist durch Soll-Lageparameter definiert, die in einem Computermodell hinterlegt sind und in Form der Bauraum-Koordinaten an die Steuereinheit der additiven Fertigungsvorrichtung übergeben werden. Auf Basis der Soll-Lageparameter wird das Kalibriermuster gefertigt, welches im Anschluss in Form von Ist-Lageparametern erfasst wird. Die Auswerteeinheit ist eingerichtet, die Korrekturwerte für die Bauraum-Koordinaten auf Basis eines Soll-Ist-Vergleichs der vorgegebenen Soll-Lageparameter und der erfassten Ist-Lageparameter unter Berücksichtigung und in Relation zu den am Bauplattformsystem angebrachten Referenzmarkierungen zu ermitteln. Die mathematischen Methoden zur Ermittlung der Korrekturwerte aus dem zweidimensionalen Soll-Ist-Mustervergleich sind grundsätzlich bekannt und werden an dieser Stelle nicht weiter erläutert.

Erfindungsgemäß wird das Kalibrierverfahren in den folgenden Verfahrensschritten durchgeführt:
Im ersten Schritt werden die Kalibrierplatte und der oder die mit den Referenzmarkierungen versehenen Referenzmarkenträger an dem im Bauraum der additiven Fertigungsvorrichtung angeordneten Bauplattformsystem fixiert. Das Bauplattformsystem ist hierzu seinerseits bestimmungsgemäß in der additiven Fertigungsvorrichtung installiert.

Im nächsten Schritt wird mittels des steuerbaren Lasers durch lokales Abtragen der Oberflächenschicht auf der Sichtfläche der Kalibrierplatte das aus den Musterelementen bestehende Kalibriermuster eingebracht. Das Kalibriermuster erstreckt sich hierbei über die gesamte Sichtfläche der Kalibrierplatte. Durch das lokale Abtragen wird im Bereich der Musterelemente eine Oberfläche erzeugt, die sich farblich von der umgebenden Oberflächenschicht abhebt; ein helles Musterelement in dunkler Umgebung hat sich als besonders geeignet erwiesen. Vorzugsweise wird der Laser beim Einbringen des Kalibriermusters in die Kalibrierplatte mit den für die additive Fertigung in der additiven Fertigungsvorrichtung prozesstypischen Parametern betrieben.

Im nachfolgenden Schritt wird das Bauplattformsystem mit der darauf befestigten Kalibrierplatte auf eine vorgegebene Position im Bauraum, d. h. auf einen vorgegebenen Arbeitsabstand der optischen Erfassungseinheit, gebracht, zum Beispiel durch Absenken im Bauschacht der additiven Fertigungsanlage.

Im nächsten Schritt wird das Optikmodul am Bauraum angebracht, wobei die Auflageplatte des Optikmoduls den Bauraum abdeckt. Die Auflageplatte ist hierbei vorzugsweise so dimensioniert, dass der Bauraum durch ein geringfügiges Übermaß der Auflageplatte vollständig gegen das Eindringen von Umgebungslicht abgeschirmt ist.

In dieser Position wird nun ein (vorzugsweise digitales) Abbild der Kalibrierplatte mittels der optischen Erfassungseinheit aufgenommen. Das Abbild kann zum Beispiel ein Lichtbild oder eine Punktewolke sein. Vorzugsweise ist die optische Erfassungseinheit mit ihrer optischen Achse senkrecht zur Kalibrierplatte ausgerichtet, um ein perspektivisch unverzerrtes Abbild der Kalibrierplatte aufzunehmen.

Das aufgenommene Abbild der Kalibrierplatte wird schließlich in der Auswerteeinheit ausgewertet, d. h., es werden die Ist-Lageparameter für jedes einzelne Musterelement des Kalibriermusters bestimmt. Auf dieser Basis werden dann die Korrekturwerte der Bauraum-Koordinaten - ebenfalls mittels der Auswerteeinheit - ermittelt.

Einer der Vorteile des erfindungsgemäßen Kalibriersystems sowie des Kalibrierverfahrens ist die Verwendung der Kalibrierplatte mit der Oberflächenschicht, die mit dem Laser zum Einbringen des Kalibriermusters lokal abgetragen wird. Dieser Abtrag erfordert nämlich eine Einstellung von Laserparametern, zum Beispiel der Laserleistung, die denen bei additiver Fertigung von Bauteilen relativ nahekommen.

Durch diese Form der Herstellung des Kalibriermusters bilden sich im erfassten Abbild des Kalibriermusters alle vorrichtungsbedingten Abweichungen exakt ab. Es können für jede Position des Bauplattformsystems ortsaufgelöst sehr genaue Korrekturwerte ermittelt werden. Da an die Steuereinheit zur Steuerung des Lasers die Bauraum-Koordinaten mit den Korrekturwerten übergeben werden, ist keinerlei Eingriff in die Steuerung erforderlich, d. h., in die Maschinensteuerung der additiven Fertigungsanlage wird nicht eingegriffen. Dies ist vor allem dann von Belang, wenn die additive Fertigungsvorrichtung Zertifizierungsauflagen unterliegt. Aufgrund des nicht erforderlichen Eingriffs in die Maschinensteuerung der additiven Fertigungsvorrichtung bei Anwendung der vorliegend beschriebenen Kalibriermethode bleiben Anlagenzertifizierungen insofern erhalten.

Ein weiterer Vorteil der kompakten Ausführung des Optikmoduls mit der Auflageplatte besteht darin, dass kein Fremdlicht in den Bauraum während der Abbildaufnahme fällt. Die Kalibrierplatte wird in stets gleichbleibender Weise über die vordefinierten, bauraumseitig an der Auflageplatte angebrachten Leuchtmittel während der Aufnahme des Abbildes beleuchtet.

Die Kalibrierung des Bauplattformsystems in einer additiven Fertigungsvorrichtung mit der vorstehend beschriebenen Kalibriermethode kann schnell und unkompliziert durchgeführt werden, üblicherweise dauert der Kalibriervorgang nur wenige Minuten.

Das Kalibriersystem und das Kalibrierverfahren eignen sich - aufgrund der durch die Kalibrierung verbesserten Fertigungsgenauigkeit bei der additiven Fertigung - insbesondere zur Kostensenkung bei hybrider additiver Neuteilfertigung, bei Reparatur additiv designter Bauteile, bei Reparatur konventionell hergestellter Bauteile oder bei Reparatur von additiv gefertigten Bauteilen nach sogenannten "failed build jobs", d. h. zur Korrektur eines fehlerhaften additiven Aufbaus.

Das Bauplattformsystem ist vorzugsweise so ausgebildet, wie dies in der deutschen Patentanmeldung DE 10 2022 129 035.2 bzw. in der internationalen Patentanmeldung mit der Anmeldenummer PCT/DE2023/150027 beschrieben ist. In dieser Hinsicht wird Bezug genommen auf die deutsche Patentanmeldung mit der Anmeldenummer DE 10 2022 129 035.2 und die internationale Patentanmeldung mit der Anmeldenummer PCT/DE2023/150027, deren Inhalte hiermit in dieser Patentanmeldung aufgenommen werden.

Gemäß einer Ausgestaltung des Kalibriersystems wird als Grundwerkstoff, aus dem die Kalibrierplatte besteht, ein Material gewählt, das dem der additiv zu fertigenden Bauteile entspricht oder diesem in Bezug auf Fertigungsparameter besonders ähnlich ist. Im Regelfall handelt es sich um einen metallischen Grundwerkstoff. Es hat sich hierbei zum Beispiel herausgestellt, dass Stahlwerkstoffe in dieser Hinsicht vergleichsweise universell einsetzbar sind; im Allgemeinen werden metallische Werkstoffe mit einer Dichte im Bereich von 4 g·cm⁻³ bis 10 g·cm⁻³ als Grundwerkstoff der Kalibrierplatte bevorzugt eingesetzt.

Zur Kontrastverbesserung besitzt die Oberflächenschicht an der Sichtfläche der Kalibrierplatte nach Möglichkeit ein mattes Erscheinungsbild. Die Oberflächenschicht kann eine Auflageschicht oder eine Umwandlungsschicht, d. h. eine durch oberflächliche Umwandlung des Grundwerkstoffs erzeugte Oberflächenschicht, sein. Vorzugsweise ist die Oberflächenschicht eine oxidische Umwandlungsschicht aus dem - insbesondere metallischen - Grundwerkstoff der Kalibrierplatte, zum Beispiel eine Brünierschicht, wenn der Grundwerkstoff ein Stahlwerkstoff ist, oder eine Anodisierschicht, wenn der Grundwerkstoff ein Titan- oder Aluminiumwerkstoff ist. Die oxidischen Umwandlungsschichten bieten eine sehr gute Haftung, d. h. sind abriebfest, besitzen üblicherweise ein mattes Erscheinungsbild und können, sofern sie nicht bereits dunkel gefärbt sind, in geeigneter Weise gefärbt werden.

Neben metallischen Werkstoffen sind zum Beispiel auch Glaswerkstoffe als Grundwerkstoff der Kalibrierplatte einsetzbar.

Gemäß einer weiteren Ausgestaltung weist das Optikmodul des Kalibriersystems einen oder mehrere Sensoren auf. Ein solcher Sensor kann beispielsweise ein Entfernungssensor zur Detektion des Abstandes der auf dem Bauplattformsystem fixierten Kalibrierplatte zu der am Bauraum angebrachten optischen Erfassungseinheit sein; geeignete Entfernungssensoren sind unter anderem induktiv arbeitende Abstandssensoren oder laserbasierte Abstandssensoren. Der Entfernungssensor ermöglicht es, den vorgegebenen Arbeitsabstand der optischen Erfassungseinheit präzise einzustellen bzw. nachzujustieren.

Ferner kann das Optikmodul einen Neigungssensor zur Bestimmung der Ausrichtung der optischen Erfassungseinheit und/oder zur Überwachung der lotrechten Ausrichtung der optischen Erfassungseinheit aufweisen. Mittels des Neigungssensors wird sichergestellt, dass die optische Erfassungseinheit im Optikmodul verkippungsfrei (lotrecht) ausgerichtet ist. Die Kalibrierplatte und/oder das darunter liegende Bauplattformsystem können ebenfalls mit einem Neigungssensor ausgestattet sein, um die senkrechte Ausrichtung der optischen Achse der optische Erfassungseinheit zur Kalibrierplatte zu überprüfen bzw. sicherzustellen. Bei Detektion einer Verkippung kann diese im Nachgang im Rahmen der Auswertung mathematisch ausgeglichen bzw. korrigiert werden.

Alternativ kann die Verkippung auch über mehrere der Entfernungssensoren überprüft werden, die beispielsweise an drei oder vier Positionen den Abstand zwischen dem Optikmodul und der Kalibrierplatte ermitteln.

Weiterhin kann im Optikmodul ein Temperatursensor installiert sein. Mittels des Temperatursensors kann überprüft werden, ob für die optische Erfassungseinheit und die Kalibrierplatte eine vorgegebene Messtemperatur oder ein vorgegebener Messtemperaturbereich eingehalten wird.

Das Optikmodul kann ferner einen RFID-Transponder zur kontaktlosen Datenspeicherung und Datenabfrage von Identifikationsdaten aufweisen. Das Kürzel RFID (engl.: radio-frequency identification) beschreibt eine bekannte Technologie zum automatischen und berührlosen Identifizieren und Lokalisieren von Objekten mittels Radiowellen; ein RFID-System umfasst regelmäßig einen RFID-Transponder und ein Lesegerät. Mittels des RFID-Transponders des Optikmoduls kann der Zugriff auf das Kalibriersystem gesteuert werden, zum Beispiel durch eine vom Bediener zu autorisierende Freigabe des Kalibriersystems.

Bei größeren additiven Fertigungsanlagen, zum Beispiel solchen, die mehrere Laser aufweisen, d. h. bei sogenannten Multilasersystemen, kann vorgesehen sein, dass das Optikmodul mehrere der optischen Erfassungseinheiten aufweist, wobei jedem der Laser eine der optischen Erfassungseinheiten zugeordnet ist. Hierdurch kann die Kalibrierung simultan für das jeweilige Bearbeitungsfeld jedes spezifischen Lasers vorgenommen werden. Gemäß einer anderen Ausgestaltung des Optikmoduls kann dieses eine verfahrbare, zum Beispiel eine positionsverstellbare, optische Erfassungseinheit aufweisen. Die optische Erfassungseinheit wird hierzu auf definierte Positionen verfahren, um nacheinander Abbilder für das jeweilige Bearbeitungsfeld jedes spezifischen Lasers aufzunehmen.

Die Referenzmarkenträger des Kalibriersystems können in unterschiedlicher Weise ausgebildet sind, zum Beispiel als Passstifte, die im Bauplattformsystem positionsfixiert einbringbar sind. Die Referenzmarkierungsträger werden - zur Vermeidung von perspektivischen Fehlern bei der Abbildaufnahme - vorzugsweise so am Bauplattformsystem befestigt, dass ihre Referenzmarkierung sich in der gleichen Ebene wie die Sichtfläche der Kalibrierplatte befindet.

Vorzugsweise wird eine Mehrzahl von gleichmäßig verteilten Referenzmarkenträgern bzw. Referenzmarkierungen am Bauplattformsystem angebracht, zum Beispiel vier auf den Ecken und eine mittig in einem Rechteck angeordnete Referenzmarkierung. Über die Referenzmarkierungen kann eine mögliche Verkippung der optischen Erfassungseinheit relativ zur Kalibrierplatte mathematisch ausgeglichen werden. Hierbei wird über die definiert bekannten Referenzmarkierungen eine Homographie-Matrix ermittelt. Auf dieser Basis kann ein "nicht verkipptes" Abbild errechnet werden, indem jeder Punkt des Abbildes mit der Homographie-Matrix multipliziert wird.

Alternativ zu Passstiften kann jede andere Form von Referenzmarkenträgern verwendet werden, die definiert am Bauplattformsystem fixierbar ist, wie zum Beispiel magnetische Halbkugeln.

Die Fixierung der Kalibrierplatte am Bauplattformsystem kann beispielsweise mittels Schraubenverbindungen erfolgen. Alternativ sind auch Magnethalterungen einsetzbar, deren Vorteil insbesondere darin besteht, dass auf der Sichtfläche kein Flächenverlust durch die Befestigungselemente eintritt, d. h. mehr Raum für die Musterelemente des Kalibriermusters zur Verfügung steht.

Gemäß einer Ausgestaltung kann das Kalibriersystem eine Kalibrierplattform zum Fixieren der Kalibrierplatte am Bauplattformsystem aufweisen, wobei die Kalibrierplatte auf der Kalibrierplattform befestigt ist. Die Einheit aus Kalibrierplatte und Kalibrierplattform wird zur Kalibrierung am Bauplattformsystem angebracht. Die Referenzmarkenträger sind hierbei positionsgenau auf der Kalibrierplattform fest installiert. Zum Kalibrieren des Bauplattformsystems sind die Kalibrierplatte ebenso wie die Referenzmarkenträger über die Kalibrierplattform, d. h. mittelbar, am Bauplattformsystem befestigt bzw. fixierbar.

Gemäß einer Ausgestaltung des Kalibrierverfahrens besteht das mittels des Lasers in die Oberflächenschicht auf der Sichtfläche der Kalibrierplatte eingebrachte Kalibriermuster aus einer Vielzahl der einzelnen Musterelemente, die jeweils eine identische, zweidimensionale Geometrie besitzen. Die Musterelemente sind hierbei beabstandet zueinander in Reihen und Spalten auf der Sichtfläche der Kalibrierplatte platziert. Vorzugsweise sind die Musterelemente so angeordnet, dass jedes der Musterelemente zu jedem seiner innerhalb der gleichen Reihe oder Spalte benachbarten Musterelemente einen Mindestabstand aufweist, der größer oder gleich der Erstreckung bzw. der Ausdehnung des Musterelements ist.

Jedes einzelne der Musterelemente weist bevorzugt jeweils eine vierzählige Drehsymmetrie, mindestens zwei senkrecht zueinanderstehende Geradenabschnitte und ein einzelnes Kreis- oder Punktelement auf. Ein Beispiel für eine derartige Gestaltung des Musterelements ist ein Fadenkreuz aus zwei sich mittig kreuzenden, senkrecht zueinanderstehenden Geradenabschnitten, deren Schnittpunkt gleichzeitig das einzelne Punktelement bildet. Eine andere Gestaltung des Musterelements ist ein Quadrat mit einem einbeschriebenen Kreiselement. Aufgrund der vierzähligen Drehsymmetrie befindet sich das einzelne Kreis- oder Punktelement notwendigerweise stets im Mittelpunkt des Musterelements. Anhand des Kreis- oder Punktelements werden als Teil der Lageparameter der Musterelemente deren Lagekoordinaten bzw. deren Position in der Ebene bestimmt; anhand der Geradenabschnitte wird eine Winkelverdrehung als Teil der Lageparameter ermittelt. Bei vorgegebenen Soll-Lageparametern für ein spezifisches Musterelement des Kalibriermusters, definiert zum Beispiel in Form einer Soll-X-Lagekoordinate, einer Soll-Y-Lagekoordinate und einer Soll-Winkellage, ergibt sich nach Auswertung des Abbildes des Kalibriermusters für dieses Musterelement eine Ist-X-Lagekoordinate, eine Ist-Y-Lagekoordinate und eine Ist-Winkellage. Aus den Differenzen, d. h. durch Soll-Ist-Vergleich der Lageparameter, werden mittels der Auswerteeinheit die Korrekturwerte für jede der Bauraumkoordinaten im Bauraum-Koordinatensystem ermittelt.

Die Erfindung ist nachfolgend anhand von Ausführungsbeispielen und mit Bezug auf die schematischen Zeichnungen näher erläutert, wobei gleiche oder ähnliche Merkmale mit gleichen Bezugszeichen versehen sind; dazu zeigen:
- Fig. 1:: ein mit Bauteilen bestücktes Bauplattformsystem in Perspektivdarstellung,
- Fig. 2:: das in einer additiven Fertigungsvorrichtung installierte Kalibriersystem gemäß einer ersten Ausführungsform in Perspektivdarstellung,
- Fig. 3:: das Kalibriersystem gemäß der ersten Ausführungsform vor dem Aufbringen des Kalibriermusters in Perspektivdarstellung,
- Fig. 4:: das Kalibriersystem gemäß der ersten Ausführungsform nach dem Aufbringen des Kalibriermusters in Perspektivdarstellung,
- Fig. 5:: die Kalibrierplatte mit Kalibriermuster in der Draufsicht,
- Fig. 6:: einen Soll-Ist-Vergleich der Lageparameter anhand eines Musterelements
- Fig. 7:: das Kalibriersystem gemäß einer zweiten Ausführungsform in Perspektivdarstellung,
- Fig. 8:: das Kalibriersystem gemäß der zweiten Ausführungsform in Perspektivdarstellung,
- Fig. 9:: Details des Kalibriersystems gemäß der zweiten Ausführungsform in Perspektivdarstellung, und
- Fig. 10:: Details des Kalibriersystems gemäß der zweiten Ausführungsform in Explosionsdarstellung.

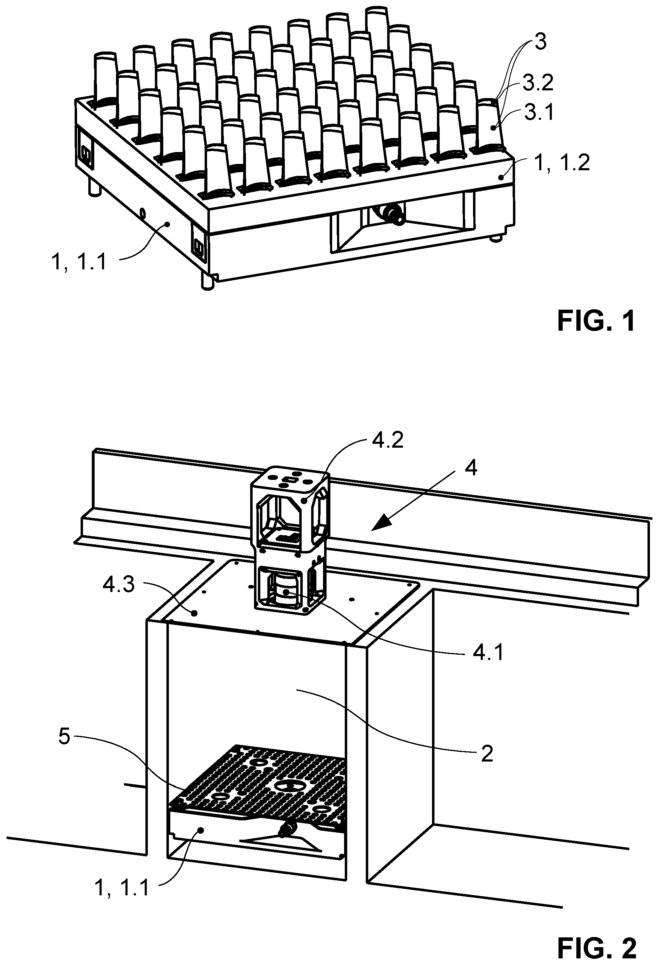

Gemäß Ausführungsbeispiel besteht - siehe hierzu Fig. 1 - das zu kalibrierende Bauplattformsystem 1 aus einer Maschineninterfaceeinheit 1.1 und einer darauf passgenau fixierbaren Bauplattform 1.2, die wiederum die Bauteile 3 trägt. In Fig. 1 sind 48 durch hybride additive Fertigung hergestellte Bauteile 3, hier beispielhaft Turbinenschaufeln für Flugtriebwerke, dargestellt. Auf die Basisformkörper 3.1 der Bauteile 3 wird im Rahmen der hybriden additiven Fertigung der Aufbauformkörper 3.2, hier beispielhaft die Schaufelspitze der Turbinenschaufel, additiv aufgebaut, sodass aus dem Basisformkörper 3.1 und dem Aufbauformkörper 3.2 jeweils wieder ein komplettes Bauteil 3 entsteht. Da vor Beginn der Fertigung die Basisformkörper 3.1 lagefixiert auf der Bauplattform 1.2 verankert sind und diese wiederum lagefixiert auf der Maschineninterfaceeinheit 1.1 arretiert wird, ist es für dieses Bauplattformsystem 1 lediglich notwendig, die Maschineninterfaceeinheit 1.1 zu kalibrieren.

In Bezug auf das im Ausführungsbeispiel dargestellte Bauplattformsystem 1, insbesondere dessen spezifischen Aufbau, wird ferner auf die Patentanmeldung PCT/DE2023/150027 Bezug genommen, deren Inhalt als Teil der vorliegenden Offenbarung zu berücksichtigen ist.

Die in Fig. 2 dargestellte additive Fertigungsvorrichtung besitzt einen Bauschacht, dessen Innenraum der Bauraum 2 ist. Im Bauraum 2 ist das Bauplattformsystem 1 in Form der Maschineninterfaceeinheit 1.1 mit der darauf angebrachten Kalibrierplatte 5 eingebracht.

Auf dem Bauschacht ist das Optikmodul 4 installiert, wobei die Auflageplatte 4.3 überdeckend auf den Bauschachtwänden aufsitzt, sodass kein Umgebungslicht in den Bauraum 2 während der Aufnahme des Abbildes (hier eines Lichtbildes) der Kalibrierplatte 5 eindringt. Die zur Abbildaufnahme genutzte optische Erfassungseinheit 4.1, hier eine Kamera, ist mittels der Optikhalterung 4.2 so an der Auflageplatte 4.3 befestigt, dass die optische Achse bzw. Blickrichtung der optischen Erfassungseinheit 4.1 senkrecht zur Auflageplatte 4.3 ausgerichtet ist; bei bestimmungsgemäßer Installation des Optikmoduls 4 ist die optische Achse der optischen Erfassungseinheit 4.1 somit lotrecht in den Bauraum 2 der additiven Fertigungsvorrichtung und senkrecht auf die Kalibrierplatte 5 gerichtet.

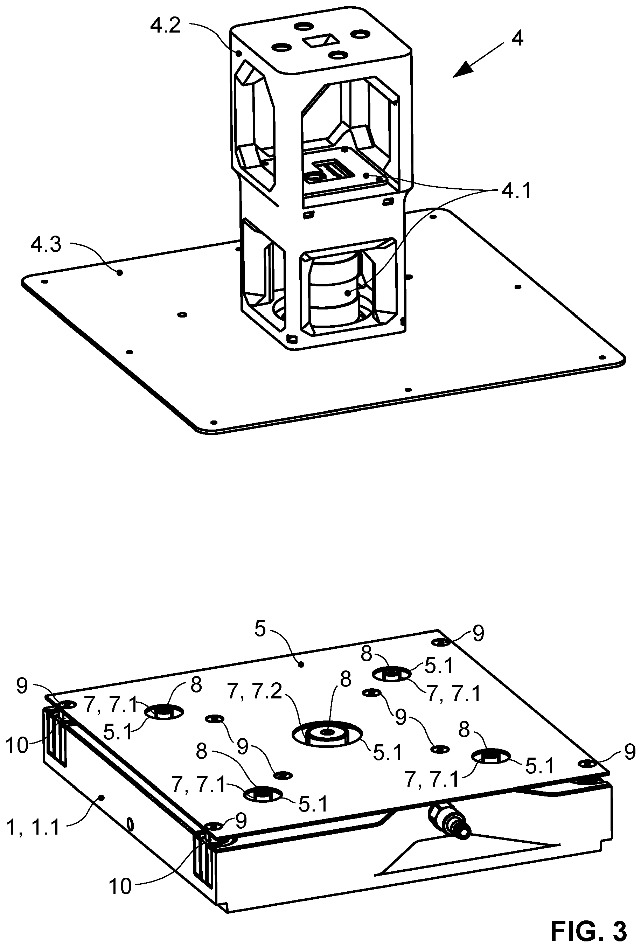

In Fig. 3 ist eine erste Ausführungsform des Kalibriersystems zum Kalibrieren des Bauplattformsystems 1 in Form der Maschineninterfaceeinheit 1.1 im detaillierten Aufbau wiedergegeben.

Die Auflageplatte 4.3 besitzt an ihrer (nicht sichtbaren) Unterseite Leuchtdioden zur Beleuchtung der Kalibrierplatte 5. Die optische Erfassungseinheit 4.1 des Optikmoduls 4 ist oberhalb der (nicht bezeichneten) Lichtdurchtrittsaussparung der Auflageplatte 4.3 mittels der Optikhalterung 4.2 befestigt.

Die auf der Maschineninterfaceeinheit 1.1 fixierte Kalibrierplatte 5 - in Fig. 3 vor dem Einbringen des Kalibriermusters 6 - besitzt fünf Referenzmarken-Aussparungen 5.1, die die Sicht der optischen Erfassungseinheit 4.1 auf die mittig an den Stirnseiten der Referenzmarkenträgern 7 angebrachten Referenzmarkierungen 8 freigeben. Die Referenzmarkenträger 7 sind gemäß Ausführungsbeispiel als in der Maschineninterfaceeinheit 1.1 eingepasste Kalibrierpassstifte 7.1 bzw. als ein in der Maschineninterfaceeinheit 1.1 magnetisch fixierbares Halbkugelelement 7.2 ausgebildet.

Die Kalibrierplatte 5 ist mittels der Befestigungsschrauben 9 auf der Maschineninterfaceeinheit 1.1 befestigt, wobei zwischen Kalibrierplatte 5 und Maschineninterfaceeinheit 1.1 die Abstandshalter 10 eingefügt sind, die sicherstellen, dass sich die Referenzmarkierungen 8 in einer Ebene mit der Sichtfläche der Kalibrierplatte 5 befinden.

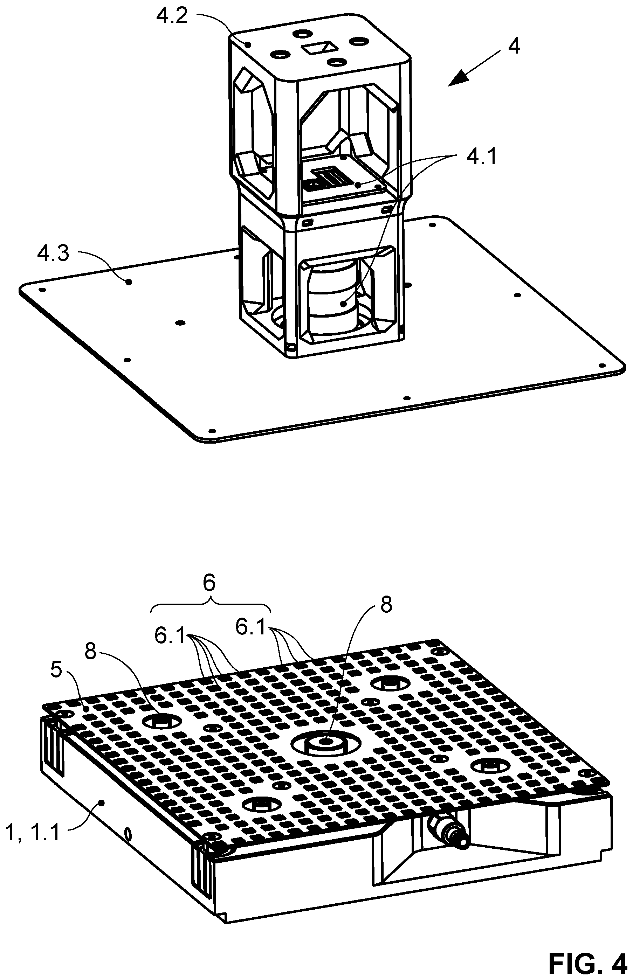

Das Kalibriersystem nach Fig. 4 entspricht dem nach Fig. 3, zeigt aber zusätzlich das auf der Sichtseite der Kalibrierplatte 5 mittels des Lasers der additiven Fertigungsvorrichtung eingebrachte Kalibriermuster 6 aus den einzelnen periodisch in Reihen und Spalten angeordneten Musterelementen 6.1.

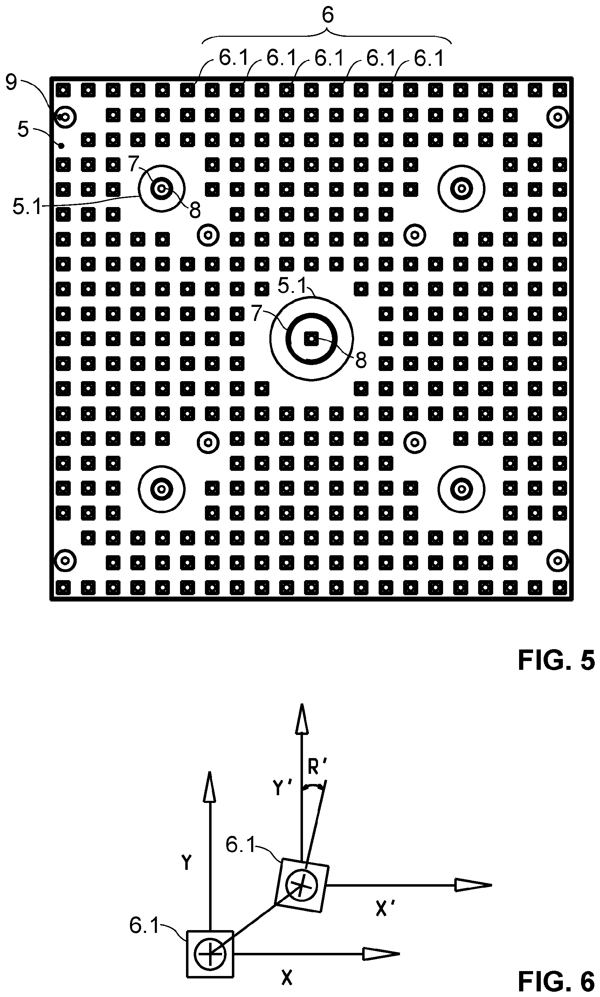

In Fig. 5 ist die Sichtseite der in Fig. 4 gezeigten Kalibrierplatte 5 in der Draufsicht wiedergegeben. Das im Rahmen des Kalibrierverfahrens erstellte Abbild entspricht der Darstellung in Fig. 5. Anhand dieses Abbildes werden die Ist-Lageparameter für jedes der zweidimensionalen Musterelemente 6.1 erfasst und mittels der Auswerteeinheit verarbeitet.

Den Soll-Ist-Vergleich der Soll-Lageparameter und der Ist-Lageparameter anhand eines der Musterelemente 6.1 im Koordinatensystem veranschaulicht Fig. 6. Die Soll-Lageparameter des zweidimensionalen Musterelements 6.1 sind die beiden vorgegebenen Soll-Lagekoordinaten X, Y und die Sollwinkellage in der zweidimensionalen Ebene, wobei das Musterelement 6.1 gemäß Vorgabe keine Verdrehung, d. h. stets eine Soll-Winkellage von 0°, aufweist. Die fotografisch bestimmten Ist-Lageparameter sind die beiden gemessenen Ist-Lagekoordinaten X', Y' und die gemessene Winkellageabweichung R' des Musterelements 6.1.

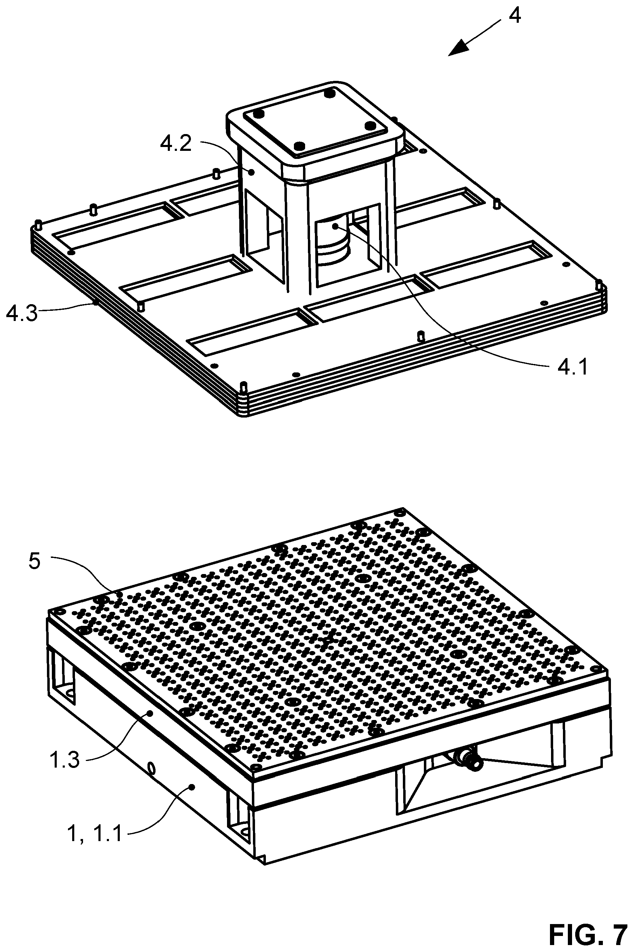

In den Fig. 7 bis 10 ist eine zweite Ausführungsform des Kalibriersystems zum Kalibrieren des Bauplattformsystems 1 wiedergegeben.

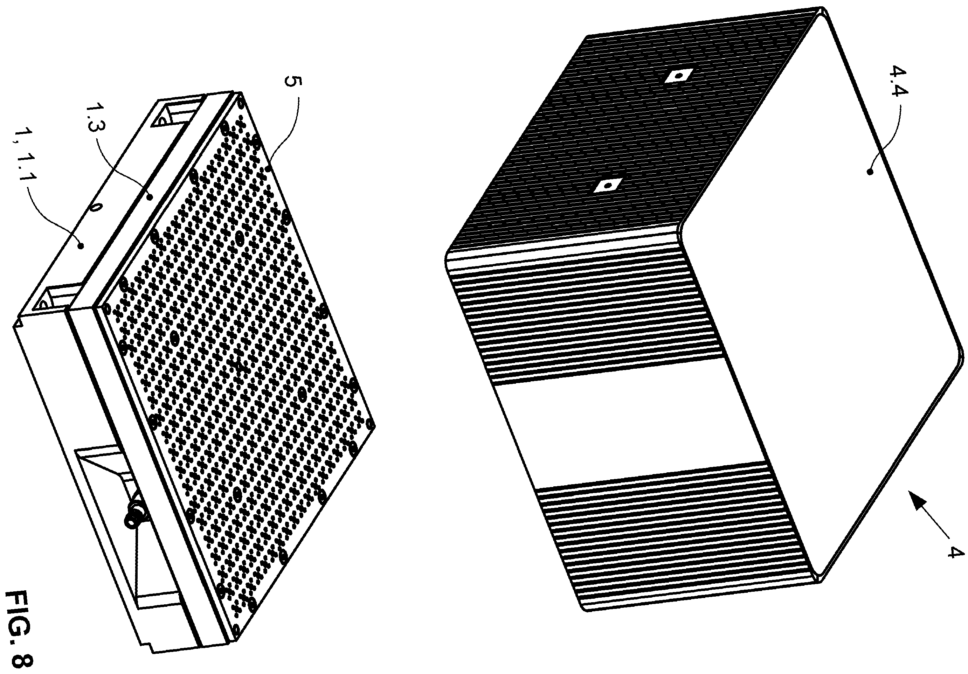

Auf der Maschineninterfaceeinheit 1.1 - siehe hierzu Fig. 7 - ist zum Kalibrieren derselben die Kalibrierplattform 1.3 mit der darauf befestigten Kalibrierplatte 5 angebracht. Das darüber befindliche Optikmodul 4 umfasst die optische Erfassungseinheit 4.1, wiederum ein Kamera (deren Objektiv in Fig. 7 sichtbar ist), die Optikhalterung 4.2 sowie eine plattenförmige Abdeckung. Diese Abdeckung ist eine Sandwichstruktur aus der nach unten abschließenden Auflageplatte 4.3, LED-Paneelen und Diffusorplatten. Fig. 8 zeigt in einer mit Fig. 7 korrespondierenden Darstellung eine Einhausung 4.4 des Optikmoduls 4, mittels der die optische Erfassungseinheit 4.1, die Optikhalterung 4.2 sowie die plattenförmige Abdeckung eingehaust bzw. abgeschirmt sind.

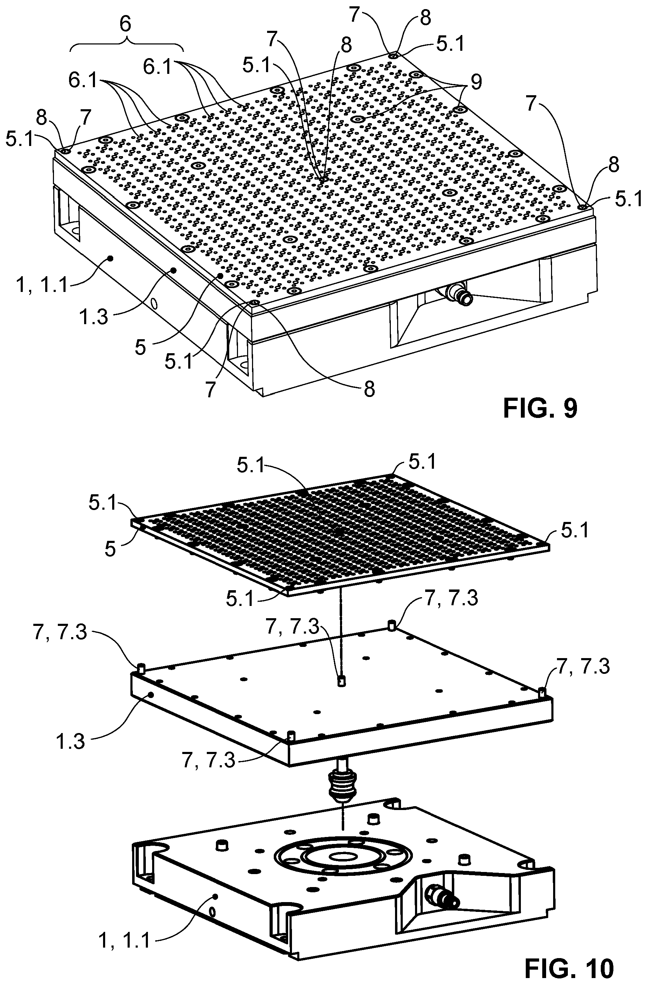

Die Detaildarstellung der Maschineninterfaceeinheit 1.1, der Kalibrierplattform 1.3 und der darauf befestigten Kalibrierplatte 5 gemäß der zweiten Ausführungsform des Kalibriersystems gehen aus den Fig. 9 und 10 hervor.

Das auf der Sichtseite der Kalibrierplatte 5 mittels des Lasers der additiven Fertigungsvorrichtung eingebrachte Kalibriermuster 6 aus den einzelnen periodisch in Reihen und Spalten angeordneten Musterelementen 6.1 gemäß Fig. 9 unterscheidet sich hinsichtlich der Ausbildung der Musterelemente 6.1 gegenüber der ersten Ausführungsform des Kalibriersystems gemäß Fig. 4.

Die mittels der Befestigungsschrauben 9 auf der Kalibrierplattform 1.3 fixierte Kalibrierplatte 5 besitzt fünf Referenzmarken-Aussparungen 5.1, die die Sicht der optischen Erfassungseinheit 4.1 auf die mittig an den Stirnseiten der Referenzmarkenträgern 7 angebrachten Referenzmarkierungen 8 freigeben.

Die Referenzmarkenträger 7 sind gemäß der zweiten Ausführungsform als Kalibrierstifte 7.3 ausgebildet, die - siehe hierzu Fig. 10 - fest auf der Kalibrierplattform 1.3 installiert sind. Die Kalibrierplatte 5 weist eine Dicke auf, die der Höhe der Kalibrierstifte 7.3 entspricht, sodass sich die Referenzmarkierungen 8 in einer Ebene mit der Sichtfläche der Kalibrierplatte 5 befinden.

Die Kalibrierplattform 1.3 ist - wie ferner aus Fig. 10 hervorgeht - mittels eines Nullpunkt-Spannsystems, geführt durch Passstifte, lagefixiert auf der Maschineninterfaceeinheit 1.1 befestigbar.

### Bezugszeichenliste

- 1: Bauplattformsystem
- 1.1: Maschineninterfaceeinheit
- 1.2: Bauplattform
- 1.3: Kalibrierplattform
- 2: Bauraum
- 3: Bauteil
- 3.1: Basisformkörper
- 3.2: Aufbauformkörper
- 4: Optikmodul
- 4.1: optische Erfassungseinheit
- 4.2: Optikhalterung
- 4.3: Auflageplatte
- 4.4: Einhausung
- 5: Kalibrierplatte
- 5.1: Referenzmarken-Aussparungen
- 6: Kalibriermuster
- 6.1: Musterelement
- 7: Referenzmarkenträger
- 7.1: Kalibrierpassstift
- 7.2: Halbkugelelement
- 7.3: Kalibrierstift
- 8: Referenzmarkierung
- 9: Befestigungsschrauben
- 10: Abstandshalter
- X, Y: vorgegebene Soll-Lagekoordinaten
- X,' Y': gemessene Ist-Lagekoordinaten
- R': gemessene Winkellageabweichung

## Patentansprüche

1. Kalibriersystem zur Kalibrierung eines in einem Bauraum (2) einer additiven Fertigungsvorrichtung angeordneten Bauplattformsystems (1), wobei die additive Fertigungsvorrichtung einen steuerbaren Laser zur Konsolidierung von Material während der additiven Fertigung auf dem Bauplattformsystems (1) aufweist, und wobei das Kalibriersystem eine auf dem Bauplattformsystem (1) fixierbare Kalibrierplatte (5) und ein Optikmodul (4) umfasst,
wobei
- die Kalibrierplatte (5) aus einem vorgegebenen Grundwerkstoff besteht, wobei die Kalibrierplatte (5) eine Sichtfläche auf einer ihrer beiden flächig ausgedehnten Plattenseiten aufweist, und
- das Optikmodul (4) eine optische Erfassungseinheit (4.1) und eine Optikhalterung (4.2) umfasst,
**dadurch gekennzeichnet, dass**
- die Sichtfläche der Kalibrierplatte (5) mit einer sich vom Grundwerkstoff farblich abhebenden Oberflächenschicht versehen ist, und
- das Optikmodul (4) ferner eine Auflageplatte (4.3) zur Abdeckung des Bauraums (2) der additiven Fertigungsvorrichtung umfasst, wobei die optische Erfassungseinheit (4.1) mittels der Optikhalterung (4.2) an der Auflageplatte (4.3) im Bereich einer Lichtdurchtrittsaussparung in der Auflageplatte (4.3) zur optischen Bilderfassung der auf dem Bauplattformsystem (1) fixierten Kalibrierplatte (5) befestigt ist, und wobei an der Auflageplatte (4.3) bauraumseitig Leuchtmittel zur Ausleuchtung des Bauraums (2) angebracht sind.

2. Kalibriersystem nach Anspruch 1, **dadurch gekennzeichnet, dass** die Oberflächenschicht auf der Sichtseite der Kalibrierplatte (5) eine oxidische Umwandlungsschicht aus dem Grundwerkstoff der Kalibrierplatte (5) ist.

3. Kalibriersystem nach Anspruch 2, **dadurch gekennzeichnet, dass** die Kalibrierplatte (5) aus einem Stahlwerkstoff besteht und wobei die Oberflächenschicht auf der Sichtseite der Kalibrierplatte (5) eine Brünierschicht ist.

4. Kalibriersystem nach einem der Ansprüche 1 bis 3, **dadurch gekennzeichnet, dass** die an der Auflageplatte (4.3) bauraumseitig angebrachten Leuchtmittel gleichmäßig verteilte Leuchtdioden sind.

5. Kalibriersystem nach einem der Ansprüche 1 bis 4, **dadurch gekennzeichnet, dass** das Optikmodul (4) einen oder mehrerer Sensoren aufweist, wobei mindestens einer der Sensoren ein Entfernungssensor zur Detektion des Abstandes der auf dem Bauplattformsystem (1) fixierten Kalibrierplatte (5) zu der am Bauraum (2) angebrachten optischen Erfassungseinheit (4.1) ist.

6. Kalibriersystem nach einem der Ansprüche 1 bis 5, **dadurch gekennzeichnet, dass** dieses einen oder mehrere Referenzmarkenträger (7) mit jeweils einer Referenzmarkierung (8) umfasst, wobei die Referenzmarkenträger (7) positionsgenau am Bauplattformsystem (1) fixierbar sind, und wobei die Kalibrierplatte (5) Referenzmarken-Aussparungen (5.1) aufweist, die bei am Bauplattformsystem (1) befestigter Kalibrierplatte (5) die Sicht der optischen Erfassungseinheit (4.1) auf die Referenzmarkierungen (8) der am Bauplattformsystem (1) fixierten Referenzmarkenträger (7) freigeben.

7. Kalibriersystem nach Anspruch 6, **dadurch gekennzeichnet, dass** das Kalibrierssystem eine Kalibrierplattform (1.3) zum Fixieren der Kalibrierplatte (5) am Bauplattformsystem (1) aufweist, wobei die Referenzmarkenträger (7) positionsgenau auf der Kalibrierplattform (1.3) fest installiert sind.

8. Kalibrierverfahren zur Kalibrierung eines in einem Bauraum (2) einer additiven Fertigungsvorrichtung angeordneten Bauplattformsystems (1), wobei die additive Fertigungsvorrichtung einen steuerbaren Laser zur Konsolidierung von Material während der additiven Fertigung auf dem Bauplattformsystem (1) aufweist und wobei
- die Lage des Bauplattformsystems (1) und darauf angebrachter Objekte im Bauraum (2) durch Bauraum-Koordinaten innerhalb eines Bauraum-Koordinatensystems definiert sind, und
- mittels einer Auswerteeinheit Korrekturwerte für die Bauraum-Koordinaten auf Basis eines Soll-Ist-Vergleichs von vorgegebenen Soll-Lageparametern und erfassten Ist-Lageparametern von zweidimensionalen Musterelementen (6.1) eines mittels des Lasers erzeugten Kalibriermusters (6) in Relation zu einem oder mehrerer am Bauplattformsystem (1) angebrachten Referenzmarkierungen (8) ermittelt werden,
**dadurch gekennzeichnet, dass**
das Kalibrierverfahren mittels der Auswerteeinheit sowie eines Kalibriersystems nach Anspruch 6 mit den folgenden Verfahrensschritten durchgeführt wird:
- Fixieren der Kalibrierplatte (5) und des oder der die Referenzmarkierungen (8) aufweisenden Referenzmarkenträger (7) an dem im Bauraum (2) der additiven Fertigungsvorrichtung angeordneten Bauplattformsystem (1),
- Einbringen eines sich über die Sichtfläche der Kalibrierplatte (5) erstreckenden Kalibriermusters (6) auf die Kalibrierplatte (5) mittels des steuerbaren Lasers der additiven Fertigungsvorrichtung durch lokales Abtragen der Oberflächenschicht auf der Sichtfläche der Kalibrierplatte (5),
- Positionieren des Bauplattformsystems (1) mit der Kalibrierplatte (5) auf einen vorgegebenen Arbeitsabstand der optischen Erfassungseinheit (4.1) im Bauraum (2),
- Anbringen des Optikmoduls (4) am Bauraum (2) und Abdecken des Bauraums (2) durch die Auflageplatte (4.3) des Optikmoduls (4),
- Aufnehmen eines Abbildes der Kalibrierplatte (5) mittels der optischen Erfassungseinheit (4.1), und
- Auswerten des Abbildes der Kalibrierplatte (5) und Ermitteln der Korrekturwerte der Bauraum-Koordinaten mittels der Auswerteeinheit.

9. Kalibrierverfahren nach Anspruch 8, **dadurch gekennzeichnet, dass** das mittels des Lasers in der Oberflächenschicht auf der Sichtfläche der Kalibrierplatte (5) eingebrachte Kalibriermuster (6) eine Vielzahl der einzelnen Musterelemente (6.1) mit identischer zweidimensionaler Geometrie aufweist, wobei die Musterelemente (6.1) beabstandet zueinander in Reihen und Spalten auf der Sichtfläche der Kalibrierplatte (5) angeordnet sind und wobei jedes einzelne der Musterelemente (6.1) jeweils
- eine vierzählige Drehsymmetrie,
- mindestens zwei, senkrecht zueinanderstehende Geradenabschnitte und
- ein einzelnes Kreis- oder Punktelement aufweist.

10. Kalibrierverfahren nach Anspruch 9, **dadurch gekennzeichnet, dass** jedes der Musterelemente (6.1) zu jedem seiner innerhalb der gleichen Reihe oder Spalte benachbarten Musterelemente (6.1) einen Mindestabstand aufweist, der größer oder gleich der Erstreckung des Musterelements (6.1) ist.

11. Kalibrierverfahren nach einem der Ansprüche 8 bis 10, **dadurch gekennzeichnet, dass** der Laser beim Einbringen des Kalibriermusters (6) in die Kalibrierplatte (5) mit für die additive Fertigung in der additiven Fertigungsvorrichtung prozesstypischen Parametern betrieben wird.

## Claims

1. Calibration system for calibrating a building platform system (1) arranged in a building space (2) of an additive manufacturing device, wherein the additive manufacturing device has a controllable laser for consolidating material during additive manufacturing on the building platform system (1), and wherein the calibration system comprises a calibration plate (5) fixable on the building platform system (1) and an optics module (4),
wherein
- the calibration plate (5) consists of a predetermined base material, the calibration plate (5) having a visible surface on one of its two flat plate sides, and
- the optics module (4) comprises an optical detection unit (4.1) and an optics holder (4.2),
**characterized in that**
- the visible surface the calibration plate (5) is provided with a surface layer that contrasts in color with the base material, and
- the optics module (4) further comprises a support plate (4.3) for covering the building space (2) of the additive manufacturing device, wherein the optical detection unit (4.1) is fastened by means of the optics holder (4.2) to the support plate (4.3) in the region of a light passage recess in the support plate (4.3) for optical image capture of the calibration plate (5) fixed on the building platform system (1), and wherein lighting means for illuminating the building space (2) are attached to the support plate (4.3) on the building space side.

2. Calibration system according to claim 1, **characterized in that** the surface layer on the visible side of the calibration plate (5) is an oxidic conversion layer made of the base material of the calibration plate (5).

3. Calibration system according to claim 2, **characterized in that** the calibration plate (5) consists of a steel material and wherein the surface layer on the visible side of the calibration plate (5) is a burnished layer.

4. Calibration system according to one of claims 1 to 3, **characterized in that** the lighting means attached to the support plate (4.3) on the building space side are uniformly distributed light-emitting diodes.

5. Calibration system according to one of claims 1 to 4, **characterized in that** the optics module (4) has one or more sensors, wherein at least one of the sensors is a distance sensor for detecting the distance of the calibration plate (5) fixed on the building platform system (1) to the optical detection unit (4.1) attached to the building space (2).

6. Calibration system according to one of claims 1 to 5, **characterized in that** it comprises one or more reference mark carriers (7), each with a reference marking (8), wherein the reference mark carriers (7) can be fixed in a precise position on the building platform system (1), and wherein the calibration plate (5) has reference mark recesses (5.1) which, when the calibration plate (5) is fastened to the building platform system (1), enable the optical detection unit (4.1) to view the reference markings (8) of the reference mark carriers (7) fixed to the building platform system (1).

7. Calibration system according to claim 6, **characterized in that** the calibration system has a calibration platform (1.3) for fixing the calibration plate (5) to the building platform system (1), wherein the reference mark carriers (7) are installed in a precisely positioned manner on the calibration platform (1.3).

8. Calibration method for calibrating a building platform system (1) arranged in a building space (2) of an additive manufacturing device, wherein the additive manufacturing device has a controllable laser for consolidating material during additive manufacturing on the building platform system (1) and wherein
- the position of the building platform system (1) and objects mounted thereon in the building space (2) are defined by building space coordinates within a building space coordinate system, and
- by means of an evaluation unit, correction values for the building space coordinates are determined on the basis of a target-actual comparison of predetermined target position parameters and captured actual position parameters of two-dimensional pattern elements (6.1) of a calibration pattern (6) generated by means of the laser in relation to one or more reference markings (8) attached to the building platform system (1),
**characterized in that**
the calibration method is carried out by means of the evaluation unit and a calibration system according to claim 6 with the following method steps:
- fixing the calibration plate (5) and the reference mark carrier or carriers (7) having the reference markings (8) to the building platform system (1) arranged in the building space (2) of the additive manufacturing device,
- applying a calibration pattern (6) extending over the visible surface of the calibration plate (5) to the calibration plate (5) by means of the controllable laser of the additive manufacturing device by locally removing the surface layer on the visible surface of the calibration plate (5),
- positioning the building platform system (1) with the calibration plate (5) at a predetermined working distance from the optical detection unit (4.1) in the building space (2),
- attaching the optics module (4) to the building space (2) and covering the building space (2) with the support plate (4.3) of the optics module (4),
- taking an image of the calibration plate (5) by means of the optical detection unit (4.1), and
- evaluating the image of the calibration plate (5) and determining the correction values of the building space coordinates using the evaluation unit.

9. Calibration method according to claim 8, **characterized in that** the calibration pattern (6) applied in by means of the laser in the surface layer on the visible surface of the calibration plate (5) has a plurality of individual pattern elements (6.1) with identical two-dimensional geometry,
wherein the pattern elements (6.1) are arranged at a distance from one another in rows and columns on the visible surface of the calibration plate (5) and wherein each of the pattern elements (6.1) comprises
- a fourfold rotational symmetry,
- at least two line segments perpendicular to each other and
- a single circle or point element.

10. Calibration method according to claim 9, **characterized in that** each of the pattern elements (6.1) has a minimum distance from each of its adjacent pattern elements (6.1) within the same row or column, which minimum distance is greater than or equal to the extension of the pattern element (6.1).

11. Calibration method according to one of claims 8 to 10, **characterized in that** the laser is operated with process parameters typical for additive manufacturing in the additive manufacturing device when introducing the calibration pattern (6) into the calibration plate (5).

## Revendications

1. Système d'étalonnage pour étalonner un système de plateforme de construction (1) disposé dans un espace de construction (2) d'un dispositif de fabrication additive, le dispositif de fabrication additive présentant un laser contrôlable pour la consolidation de matériau pendant la fabrication additive sur le système de plateforme de construction (1), et le système d'étalonnage comprenant une plaque de d'étalonnage (5) pouvant être fixée sur le système de plateforme de construction (1) et un module optique (4),
- la plaque d'étalonnage (5) étant constituée d'un matériau de base prédéterminé, la plaque d'étalonnage (5) présentant une surface visible sur l'un de ses deux côtés de plaque étendus en surface, et
- le module optique (4) comprenant une unité de détection optique (4.1) et un support optique (4.2),
**caractérisé en ce que**
- la surface visible de la plaque d'étalonnage (5) est pourvue d'une couche superficielle de couleur différente de celle du matériau de base, et
- le module optique (4) comprend en outre une plaque d'appui (4.3) pour recouvrir l'espace de construction (2) du dispositif de fabrication additive, l'unité de détection optique (4.1) étant fixée au moyen du support optique (4.2) à la plaque d'appui (4.3) dans la zone d'un évidement de passage de lumière dans la plaque d'appui (4.3) pour la saisie optique d'images de la plaque d'étalonnage (5) fixée sur le système de plateforme de construction (1), et des moyens d'éclairage étant montés sur la plaque d'appui (4.3) côté espace de construction pour éclairer l'espace de construction (2).

2. Système d'étalonnage selon la revendication 1, **caractérisé en ce que** la couche superficielle sur le côté visible de la plaque d'étalonnage (5) est une couche de conversion d'oxyde du matériau de base de la plaque d'étalonnage (5).

3. Système d'étalonnage selon la revendication 2, **caractérisé en ce que** la plaque d'étalonnage (5) est constituée d'un matériau en acier et dans lequel la couche superficielle sur le côté visible de la plaque d'étalonnage (5) est une couche de brunissage.

4. Système d'étalonnage selon l'une des revendications 1 à 3, **caractérisé en ce que** les moyens d'éclairage montés sur la plaque d'appui (4.3) du côté de l'espace de construction sont des diodes électroluminescentes réparties uniformément.

5. Système d'étalonnage selon l'une des revendications 1 à 4, **caractérisé en ce que** le module optique (4) comporte un ou plusieurs capteurs, au moins l'un des capteurs étant un capteur de distance pour détecter la distance entre la plaque d'étalonnage (5) fixée sur le système de plateforme de construction (1) et l'unité de détection optique (4.1) montée sur l'espace de construction (2).

6. Système d'étalonnage selon l'une des revendications 1 à 5, **caractérisé en ce que** celui-ci comprend un ou plusieurs supports de marques de référence (7) avec chacun un marquage de référence (8), les supports de marques de référence (7) pouvant être fixés en position exacte sur le système de plateforme de construction (1), et la plaque d'étalonnage (5) présentant des évidements pour marques de référence (5.1) qui, lorsque la plaque d'étalonnage (5) est fixée au système de plateforme de construction (1), libèrent la vue de l'unité de détection optique (4.1) sur les marquages de référence (8) des supports de marques de référence (7) fixés au système de plateforme de construction (1).

7. Système d'étalonnage selon la revendication 6, **caractérisé en ce que** le système d'étalonnage présente une plateforme d'étalonnage (1.3) pour fixer la plaque d'étalonnage (5) sur le système de plateforme de construction (1), les supports de marques de référence (7) étant installés de manière fixe en position exacte sur la plateforme d'étalonnage (1.3).

8. Procédé d'étalonnage pour l'étalonnage d'un système de plateforme de construction (1) disposé dans un espace de construction (2) d'un dispositif de fabrication additive, le dispositif de fabrication additive présentant un laser pouvant être commandé pour la consolidation de matériau pendant la fabrication additive sur le système de plateforme de construction (1) et
- la position du système de plateforme de construction (1) et des objets montés sur celui-ci dans l'espace de construction (2) étant définie par des coordonnées d'espace de construction à l'intérieur d'un système de coordonnées d'espace de construction, et
- des valeurs de correction pour les coordonnées de l'espace de construction étant déterminées au moyen d'une unité d'évaluation sur la base d'une comparaison entre la valeur de consigne et la valeur réelle de paramètres de position de consigne prédéfinis et de paramètres de position réels saisis d'éléments de motif bidimensionnels (6.1) d'un motif d'étalonnage (6) généré au moyen du laser en relation avec un ou plusieurs marquages de référence (8) appliqués sur le système de plateforme de construction (1),
**caractérisé en ce que**
le procédé d'étalonnage est effectué au moyen de l'unité d'évaluation ainsi que d'un système d'étalonnage selon la revendication 6 avec les étapes de procédé suivantes :
- fixation de la plaque d'étalonnage (5) et du ou des supports de marques de référence (7) présentant les marquages de référence (8) sur le système de plateforme de construction (1) disposé dans l'espace de construction (2) du dispositif de fabrication additive,
- application d'un motif d'étalonnage (6) s'étendant sur la surface visible de la plaque d'étalonnage (5) sur la plaque d'étalonnage (5) au moyen du laser contrôlable du dispositif de fabrication additive par enlèvement local de la couche superficielle sur la surface visible de la plaque d'étalonnage (5),
- positionnement du système de plateforme de construction (1) avec la plaque d'étalonnage (5) à une distance de travail prédéfinie de l'unité de détection optique (4.1) dans l'espace de construction (2),
- mise en place du module optique (4) sur l'espace de construction (2) et recouvrement de l'espace de construction (2) par la plaque d'appui (4.3) du module optique (4),
- enregistrement d'une image de la plaque d'étalonnage (5) au moyen de l'unité de détection optique (4.1), et
- évaluation de l'image de la plaque d'étalonnage (5) et détermination des valeurs de correction des coordonnées de l'espace de construction au moyen de l'unité d'évaluation.

9. Procédé d'étalonnage selon la revendication 8, **caractérisé en ce que** le motif d'étalonnage (6) introduit au moyen du laser dans la couche superficielle sur la surface visible de la plaque d'étalonnage (5) présente une pluralité des éléments de motif individuels (6.1) avec une géométrie bidimensionnelle identique, les éléments de motif (6.1) étant disposés à distance les uns des autres en rangées et en colonnes sur la surface visible de la plaque d'étalonnage (5) et chacun des éléments de motif (6.1) comportant respectivement
- une symétrie de rotation à quatre chiffres,
- au moins deux segments de droite perpendiculaires entre eux, et
- un seul élément de cercle ou de point.

10. Procédé d'étalonnage selon la revendication 9, **caractérisé en ce que** chacun des éléments de motif (6.1) présente, par rapport à chacun de ses éléments de motif (6.1) voisins à l'intérieur de la même rangée ou colonne, une distance minimale qui est supérieure ou égale à l'étendue de l'élément de motif (6.1).

11. Procédé d'étalonnage selon l'une des revendications 8 à 10, **caractérisé en ce que,** lors de l'introduction du motif d'étalonnage (6) dans la plaque d'étalonnage (5), le laser est utilisé avec des paramètres typiques du processus de fabrication additive dans le dispositif de fabrication additive.
